Europäisches Patentamt

European Patent Office

Office européen des brevets

(19)

(11) Numéro de publication: **0 023 857**
**B1**

(12) # FASCICULE DE BREVET EUROPEEN

(45) Date de publication du fascicule du brevet:
**20.07.83**

(51) Int. Cl.³: **G 01 S 17/10,** G 01 S 17/58,
G 01 S 13/28

(21) Numéro de dépôt: **80401100.5**

(22) Date de dépôt: **24.07.80**

(54) **Dispositif de détection électromagnétique à compression d'impulsions.**

(30) Priorité: **03.08.79 FR 7919970**

(43) Date de publication de la demande:
**11.02.81 Bulletin 81/6**

(45) Mention de la délivrance du brevet:
**20.07.83 Bulletin 83/29**

(84) Etats contractants désignés:
**DE GB NL SE**

(56) Documents cités:

**FR-A-1 405 204**
**GB-A-1 249 843**
**US-A-3 225 349**
**US-A-3 363 248**
**US-A-3 905 033**

**Le dossier contient des informations techniques
présentées postérieurement au dépôt de la demande et
ne figurant pas dans le présent fascicule.**

(73) Titulaire: **THOMSON-CSF, 173, Boulevard Haussmann,
F-75379 Paris Cedex 08 (FR)**

(72) Inventeur: **Robin, Léon, "THOMSON-CSF" SCPI 173, Bld
Haussmann, F-75360 Paris Cedex 08 (FR)**

(74) Mandataire: **Trocellier, Roger et al, THOMSON-CSF
SCPI 173, Bld Haussmann, F-75379 Paris Cedex 08 (FR)**

## Dispositif de détection électromagnétique à compression d'impulsions

La présente invention concerne un dispositif de détection électromagnétique à compression d'impulsions, destiné plus particulièrement à réaliser un télémètre laser.

Un dispositif de détection électromagnétique à compression d'impulsions comporte, de manière connue, un émetteur avec un générateur d'impulsions suivi d'un filtre dispersif qui introduit un retard fonction de la fréquence et qui produit en conséquence un allongement de l'impulsion d'émission; la sortie du filtre est ensuite mélangée avec une onde porteuse locale provenant d'un générateur d'ondes à la fréquence porteuse d'émission. Le filtre dispersif peut être réalisé de diverses manières pour produire, par exemple, une modulation linéaire en fréquence ou encore un passage alterné de phase négative à la phase positive ou une fonction étagée etc... Dans le récepteur, les échos reçus sont d'abord traités dans un mélangeur recevant une onde locale pour produire une réception homodyne ou superhétérodyne, puis appliqués à un filtre adapté qui produit la fonction inverse du filtre émetteur pour restaurer le signal par compression d'impulsion; le signal est ensuite mis sous forme vidéo par détection et traité dans un circuit de mesure de la distance donnée par l'intervalle du temps séparant l'émission de la réception correspondante.

L'invention a pour objet une réalisation particulière d'un tel dispositif permettant, d'une part la mesure de la fréquence Doppler d'une cible détectée, c'est-à-dire sa vitesse radiale vis-à-vis du système, et d'autre part de discriminer chaque cible par sa distance et sa vitesse radiale dans le cas de plusieurs cibles détectées.

Il est connu par le document de brevet FR-A-1 405 204 un système de détection électromagnétique à compression d'impulsions comportant, à l'émission, un générateur d'impulsions périodiques modulées en fréquence connecté à un générateur d'ondes électromagnétiques et à la réception, un mélangeur alimenté par une onde locale issue du générateur d'ondes électromagnetiques et qui est connecté à travers un filtre adapté de type dispersif à un circuit de détection suivi d'un circuit de mesure qui détermine la distance et la fréquence Doppler d'une cible détectée. Dans ce radar Doppler à compression d'impulsions, une seule impulsion est émise à la fois et elle est modulée en fréquence selon une loi linéaire et est conjuguée de l'impulsion émise au début de la période précédente. L'émission d'impulsions conjuguées se produit donc au cours de périodes successives. Le système utilise une ligne dispersive à retard et des moyens de mesure pour mesurer en temp réel à la fois la distance et la vitesse de la cible détectée. Le système n'est pas prévu pour traiter plusieurs cibles à la fois.

Le document de brevet US-A-3 225 349 décrit un radar à élimination d'échos fixes où il est produit à l'émission, des impulsions larges, modulées en fréquence linéairement, conjuguées, émises périodiquement. A la réception, le filtrage dispersif est conjugué. Différentes réalisations sont décrites avec des voies filtre communes à l'émission et à la réception, ou distinctes. Dans le cas de la fig. 7, les voies filtre sont communes avec une même distribution à l'émission et à la réception, et l'émission comporte un groupe de quatre impulsions par période. Un traitement à la réception permet d'éliminer les échos fixes. Les filtres dispersifs comportent deux paires de filtres conjugués, le produit temps × bande passante d'une paire étant le double de celui de l'autre paire. Il n'est pas prévu de mesure de distance et de fréquence Doppler d'une ou plusieurs cibles.

Selon l'invention, le dispositif proposé comporte, pour résoudre le problème posé, au moins deux paires de lignes à retard variable avec la fréquence pour former le filtre dispersif et un deuxième agencement identique, utilisé de manière conjuguée, pour former le filtre adapté, les lignes d'une même paire ayant des pentes de même valeur et de signe opposé, les valeurs de pentes étant différentes d'une paire de lignes à l'autre; chaque paire de lignes permet de produire périodiquement deux impulsions allongées et de déduire de l'écho de cible correspondant la distance et la vitesse selon un calcul simple faisant intervenir les instants de réception et l'intervalle de séparation des impulsions émises; l'utilisation d'au moins une deuxième paire de lignes permet de discriminer les différentes cibles éventuellement détectées par leur distance et leur vitesse et éviter des ambiguités de mesure.

Les particularités et avantages de l'invention apparaîtront dans la description qui suit, donnée à titre d'exemple à l'aide des figures annexées qui représentent:

les figures 1-a, 1-b et 1-c, des formes d'ondes et des diagrammes temporels montrant les impulsions émises et les positions des échos reçus;

la figure 2, un diagramme général d'un système de détection électromagnétique conforme à l'invention;

la figure 3, un diagramme détaillé d'un exemple de réalisation d'un système selon la figure 2.

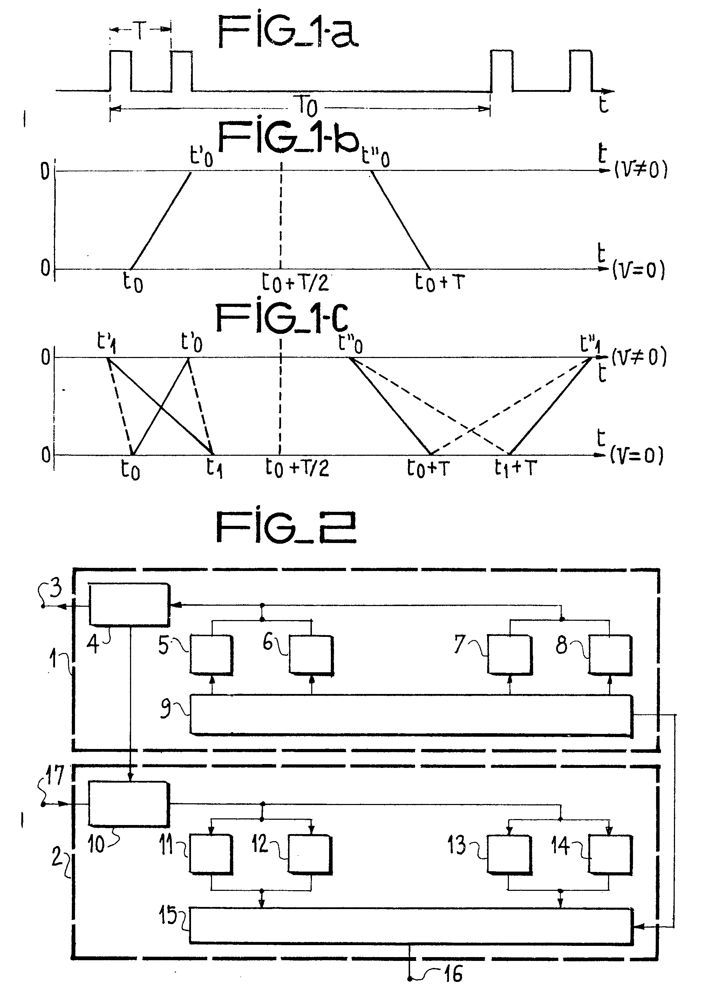

La figure 1-a montre la position temporelle des impulsions émises. Celles-ci se composent d'un couple de deux impulsions répétées à la période d'émission To. Les deux impulsions d'un même couple sont séparées par un intervalle de temps T prédéterminé, inférieur à la récurrence To et supérieur à la durée d'une impulsion émise. Le temps T définit l'ambiguité distance pour le système c'est-à-dire la distance maximale Do de détection définie par $Do = \dfrac{cT}{2}$ où $\underline{c}$ représente la vitesse de la lumière dans l'air.

Les impulsions sont traitées par compression d'impulsions. Le filtre à distorsion de phase et le filtre adapté correspondant sont réalisés au moyen de ligne à retard variable avec la fréquence encore appelées lignes dispersives. Ces lignes peuvent être du type électroacoustique. En désignant par F la fréquence du signal appliqué à la ligne, le retard $\tau_0$ introduit par celle-ci peut être de la forme $\tau_0 = \pm KF$ où K est une constante désignant la pente de la ligne et le signe indique le sens du temps de propagation de groupe. Une telle ligne permet de produire une modulation linéaire en fréquence. Pour chaque couple d'impulsions la première impulsion est traitée dans une ligne à retard variable de pente +K et la seconde impulsion dans une ligne à retard variable de pente —K.

La figure 1-b représente la situation des échos correspondant à un couple d'impulsions émises respectivement dans le cas d'une cible détectée unique immobile (v = o) et mobile (v ≠ o). L'origine des temps (t = o) correspond à l'instant d'émission de la première impulsion.

L'impulsion écho correspondant à l'impulsion d'un couple émise par passage dans la ligne à retard variable de pente +K de l'ensemble d'émission est traitée à la réception par l'intermédiaire d'une ligne à retard de pente —K et réciproquement; par conséquent, dans le cas d'une cible fixe si to représente l'instant de détection de l'écho de la première impulsion du couple d'impulsion émis, to + T représente l'instant de détection de l'écho de la seconde impulsion émise du couple considéré.

Dans le cas d'une cible mobile, les instants to et to + T deviennent respectivement t'o et t''o, avec t'o et t''o situés symétriquement par rapport à l'instant to + $\frac{T}{2}$ du fait des pentes conjuguées des lignes à retard variable utilisées pour la compression des impulsions. Les instants t'o et t''o sont donnés par les relations:

$$t'o = to + KfD$$

$$t''o = to + T - KfD$$

où fD est la fréquence Doppler due à la vitesse de déplacement radiale V non nulle de la cible : V = $\frac{\lambda fD}{2}$, où $\lambda$ est la longueur d'onde du signal utilisé pour produire les impulsions émises. On tire alors facilement des mesures de t'o et t''o effectuées à la réception, les valeurs de to et fD donnant respectivement la distance et la vitesse radiale de la cible détectée:

$$to = \frac{1}{2} (t'o + t''o - T)$$

$$fD = \frac{1}{2K} (t'o - t''o + T)$$

Il peut être remarqué qu'une première ambiguité peut naître si la vitesse radiale de la cible détectée est suffisamment grande pour que t'o soit supérieur a t''o. Cette ambiguité peut être aisément éliminée en choisissant suffisamment grande la valeur de l'intervalle de temps T séparant les deux impulsions d'un même couple. Si VM représente la vitesse radiale maximale des cibles présumées détectables, il suffit que la relation T > 4 K $\frac{VM}{\lambda}$ soit vérifiée.

Une seconde ambiguité peut apparaître dans le cas d'une pluralité de cibles illuminées et détectées. Ce cas est illustré par la figure 1-c où l'on a considéré deux cibles mobiles de sens de déplacement inverse se trouvant dans la direction de pointage dans le cas d'application à un télémètre laser. to et t1 représentent les instants de réception des deux échos de la première impulsion d'un couple d'impulsions émises en supposant la cible immobile, de même to + T et t1 + T représentent les instants de retour des échos correspondant à la seconde impulsion du couple d'impulsions considéré. Si l'on suppose les cibles mobiles on obtient pour les quatre échos to, t1, to + T et t1 + T les instants respectifs t'1, t'o, t''o, t''1 (ou t'o, t'1, t''1, t''o'). Malgré la condition à remplir pour T une ambiguité peut se produire. En effet, pour un premier écho donné l'un quelconque des deux échos t'o ou t'1, par exemple celui reçu au temps t'o, on peut lui associer tout aussi bien l'un ou l'autre des deux autres échos résultant de la seconde impulsion émise et correspodant aux instants t''o et t''1 figurés. On obtiendra ainsi deux valeurs possibles du paramètre temps mesurant la distance, égal à to pour la cible considérée, auxquelles sont associées également deux valeur de la dérive de fréquence fD:

$$to = \frac{t'o + t''o - T}{2}$$

$$fD = \frac{t'o - t''o + T}{2K}$$

$$to = \frac{t'o + t''1 - T}{2} = \frac{to + t1}{2} + K \frac{(fD1 - fD2)}{2}$$

$$fD = \frac{t'o - t''1 + T}{2K} = \frac{to - t1}{2K} + \frac{fD1 + fD2}{2}$$

où fD1 et fD2 représentent les fréquences Doppler respectives des deux cibles détectées. Le premier couple de valeurs to, fD correspond comme on le voit à un apairage correct des échos et le second à un apairage incorrect.

De même, on pourrait écrire deux autres couples de valeurs pour la deuxième cible, donnant t1 et fD1 à partir de t'1, t''o et t''1. Ces calculs ne s'avèrent pas nécessaires, à partir du moment où l'apairage correct de t'o avec t''o sera vérifié, t'1 est obligatoirement à associer à t''1.

Dans le second couple on voit que la valeur de to et celle de fD dépendent de K; en effet, bien que dans le premier couple fD semble dépendre de K il en est en fait indépendant, car sa valeur reste évidemment inchangée lorsque K varie. Pour lever l'ambiguité on effectue, conformément à l'invention, une mémorisation de ces deux couples de valeurs correspondant à une première cible et à un premier couple d'impulsions émis et l'on recommence l'opération avec le couple d'impulsions émis suivant en modifiant la valeur des coefficients ±K c'est-à-dire en utilisant des lignes à retard variable de pentes ±K' différentes; on compare ensuite les couples de valeurs (to, fD) obtenus avec les valeurs de pente K et K' différentes pour les paires respectives de lignes à retard. Seul le couple de valeurs de (to, fD) ayant un apairage correct donnera les mêmes résultats de to et fD pour les valeurs K et K'.

Le raisonnement fait ici avec deux paires de ligne à retard de pente différentes K et K' pour deux échos correspondant à deux cibles reste valable pour n échos correspondant à n cibles, seul change le nombre d'apairages incorrects qui devient n - 1. Pour n cibles distinctes deux couples de lignes à retard sont encore suffisants pour lever les ambiguités d'apairage des échos de la première et de la seconde impulsion de chaque couple d'impulsion émis.

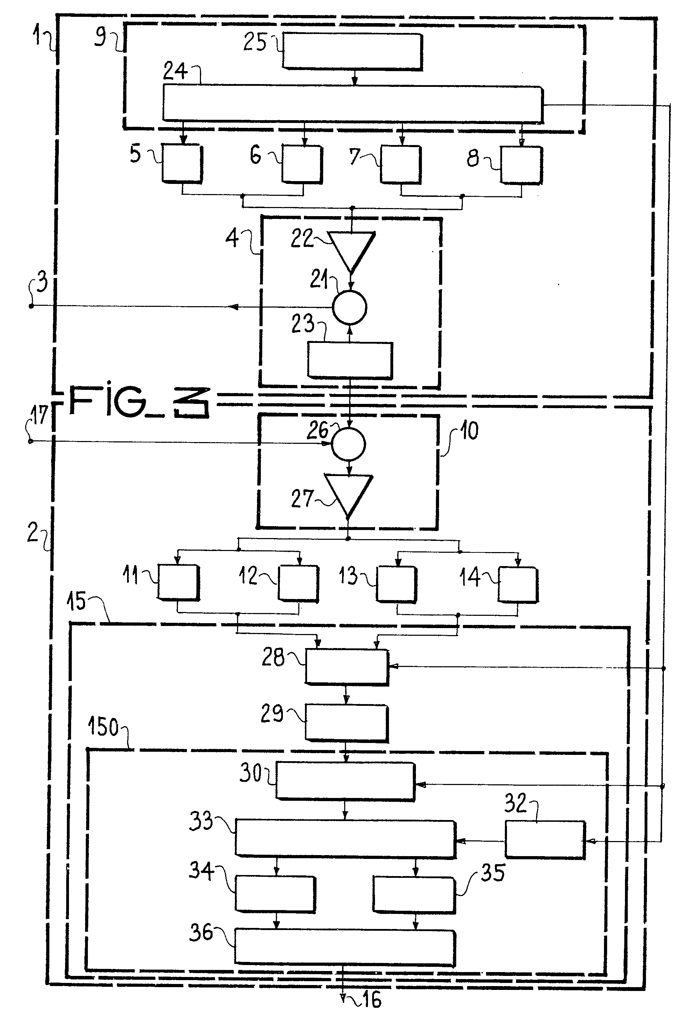

La figure 2 représente un diagramme général d'un dispositif de détection électromagnétique conforme à l'invention. Il se compose d'un ensemble émetteur 1 et d'un ensemble récepteur 2. Dans le cas d'un télémètre laser le rayonnement d'ondes électromagnétiques (3) est un faisceau lumineux émis par un générateur laser 4. L'ensemble émetteur 1 comporte un générateur d'impulsions 9 qui est connecté au mélangeur du laser 4 pour le moduler par l'intermédiaire d'un filtre dispersif constitué au moyen de quatre lignes à retard variable avec la fréquence 5, 6, 7 et 8 montées en parallèle et regroupées par leur sortie. L'ensemble récepteur 2 comporte un circuit de changement de fréquence ou mélangeur 10 selon que la réception est superhétérodyne ou homodyne, et un ensemble de circuits de mesure 15 permettant de calculer la distance et la fréquence Doppler qui traduit la vitesse radiale des cibles détectées. L'ensemble des circuits de mesure 15 est connecté au circuit 10 par l'intermédiaire d'un filtre adapté constitué par un agencement de quatre lignes à retard variable avec la fréquence 11, 12, 13 et 14 montées en parallèle et alimentées simultanément par leur entrée; ces quatre lignes sont identiques à celles de l'ensemble émetteur 1. Le circuit 10 est connecté au générateur d'ondes 4, il est considéré que les moyens de synchronisation sont inclus dans le bloc 9 qui délivre à l'ensemble du circuit de mesure 15 des impulsions de synchronisation correspondant à la référence de mesure c'est-à-dire l'instant d'émission de la première impulsion de chaque couple d'impulsions émises.

Le générateur d'impulsion 9 délivre des couples d'impulsions à la période To, chaque impulsion de durée 𝒯 étant composée d'un signal à une fréquence f et tel que le temps 𝒯 est très supérieur à 1/f de façon à ce que chaque impulsion comporte plusieurs périodes d'oscillation. La première impulsion d'un premier couple d'impulsion est appliquée par exemple à la ligne 5 de pente +K, la seconde impulsion de ce même couple d'impulsion à la ligne 6 de pente −K. La première impulsion du couple d'impulsions suivant est appliqué à la ligne 7 de pente +K' et la seconde impulsion de ce second couple d'impulsions est appliqué à la ligne 8 de pente −K'.

On applique ainsi successivement une impulsion sur chaque ligne par simple permutation circulaire au cours de deux périodes To. Les impulsions issues de ces lignes à retard variable sont mélangées avec l'onde laser de façon à obtenir un faisceau émis 3 modulé en fréquence.

Le rayonnement réfléchi par les cibles mobiles est reçu en 17 à l'entrée du récepteur et appliqué à un circuit de changement de fréquence ou mélangeur 10 permettant de restituer à la sortie de celui-ci les impulsions dont la fréquence du signal les composant varie en fonction de la vitesse radiale des cibles par lesquelles elles ont été réfléchies. Chacune de ces impulsions est ensuite appliquée simultanément à l'entrée des quatre lignes à retard variable 11, 12, 13 et 14. Le découplage entre les lignes à retard variable est tel que l'impulsion émise par l'intermédiaire d'une ligne à retard variable de pente positive d'une paire considérée ne peut traverser à la réception que celle de même pente et de signe opposé. Il y a décorrélation par les lignes de signes opposés d'une même paire et il n'est pas nécessaire de prévoir de circuit d'aiguillage à l'entrée.

En conséquence, les lignes de même pente sont connectées ensemble par une sortie formant une première paire 11, 12 de pentes +K et −K et une deuxième paire 13, 14 de pente +K' et −K' et la sélection de la paire concernée est effectuée par un circuit d'aiguillage considéré dans le bloc 15. La commutation du circuit d'aiguillage s'effectue périodiquement à la période To à chaque instant de référence de mesure par un signal de synchronisation provenant du bloc 9.

L'ensemble de circuit de mesure 15 ne recevra ainsi pour une impulsion d'émission considérée d'un couple que l'impulsion écho traitée par la ligne à retard variable de pente conjuguée par rapport à celle ayant été utilisée à l'émission; par exemple, si pour cette impulsion la ligne à retard de pente +K a été utilisée à l'émission, seul les impulsions écho provenant de cette impulsion ayant traversées la ligne à retard variable de pente −K seront transmises à l'ensemble de circuits de mesure 15.

L'ensemble de circuit de mesure 15 va ainsi recevoir une suite d'impulsions dont la position temporelle respective par rapport à l'impulsion émise correspondante diffère de la position qui correspondrait à une vitesse radiale nulle de cette cible en fonction de la fréquence Doppler fD présentée par les cibles et qui modifie le retard introduit par les lignes à retard variable.

L'ensemble de circuits de mesure 15 permet de mesurer par rapport à l'instant de référence la position temporelle respective de ces différentes impulsions et les apairer deux à deux de façon à calculer le retard correspondant à la vitesse des cibles détectées. Un traitement de levée d'ambiguité dans le cas de cibles multiples est effectué par l'ensemble de circuits de mesure 15. Les valeurs correctes de temps et de la fréquence Doppler associées à chaque cible sont ensuite disponibles pour l'exploitation sur une borne de sortie 16.

La figure 3 représente un exemple de réalisation du dispositif de détection électromagnétique applicable à un télémètre à laser. Le générateur d'ondes 4 comporte la source laser proprement dite 23, un circuit mélangeur 21 qui reçoit le faisceau laser et le signal électrique de modulation constitué par la sortie commune des quatre lignes à retard variable 5, 6, 7 et 8 après amplification en 22. Le circuit 21 peut être du type modulateur acousto-optique, délivrant le faisceau modulé en 3. Le générateur d'impulsions 9 comporte un oscillateur 25 délivrant en permanence un signal alternatif à la fréquence f. L'oscillateur 25 alimente les lignes à retard 6 à 8 à travers le circuit d'aiguillage 24 qui comporte des circuits portes logiques et/ou analogiques et un circuit de synchronisation pour commander ces circuits portes. La commande s'effectue de manière à appliquer le signal de l'oscillateur 25 pendant la durée d'impulsion brève respectivement à l'entrée de chaque ligne 5, 6, 7, 8 à des instants successifs ti, ti + T, ti + To et Ty + T, ti étant l'instant de référence d'une première période To considérée et ainsi de suite. Ainsi, la première paire de lignes 5 et 6 produit un premier couple d'impulsions longues lors d'une première période To et la deuxième paire de lignes 7 et 8 produit le deuxième couple d'impulsions longues lors de la période To suivante.

A la réception, le circuit 10 peut consister en un cristal mélangeur optique 26 recevant les échos laser à travers une optique réceptrice en 17 et une onde locale constituée par une fraction du faisceau laser émis de la source laser 23 et qui peut être réfléchie au moyen d'un miroir semi-transparent. La sortie du circuit mélangeur 26 est connectée par l'intermédiaire d'un amplificateur 27 simultanément aux deux paires de lignes à retard variable 11-12 et 13-14 de pentes respectives $\pm$K et $\pm$K'.

L'ensemble de circuits de mesure 15 comporte un circuit d'aiguillage tel un circuit porte 28 permettant de commuter les paires de lignes à la cadence To de répétition en synchronisme avec l'émission. Cet interrupteur commandé 28 est suivi d'un circuit de détection d'enveloppe vidéo 29 et d'un circuit de mesure proprement dit 150. Celui-ci comporte un chronomètre électronique ou circuit de comptage d'impulsions 30 et un multiplexeur 33. Le multiplexeur 33 est commandé à travers une bascule stable 32 dont le temps de basculement est T. Le multiplexeur 33 est connecté en sortie à un circuit de calcul 36 par l'intermédiaire de deux circuits mémoires 34 et 35. Les circuits de synchronisation en 24 commandent: la commutation en 28 à la cadence To à chaque instant initial ti d'émission d'un couple d'impulsions, la remise à zéro à ti du circuit compteur 30 et l'envoi d'un signal d'horloge pour effectuer un comptage d'impulsions et consécutivement une mesure de temps avec une précision désirée, et également à chaque instant ti le basculement du circuit 32.

L'interrupteur commandé 28 sélectionne ainsi à chaque période To une des deux paires de lignes à retard variable 11 et 12, ou 13 et 14, de pentes respectives +K et —K, +K' et —K' en synchronisme avec l'émission. Le circuit de détection 29 délivre le signal vidéo sous forme d'impulsions de durée reformées par la compression. Le chronomètre électronique 30 transmet au multiplexeur dès réception d'une impulsion détectée par le circuit 29 un signal binaire correspondant au retard de cette impulsion écho par rapport à l'instant ti de référence correspondant à l'instant initial d'émission de la première impulsion du couple d'impulsions émis durant la période To considérée. Ces mots binaires, deux dans le cas d'une cible et quatre dans le cas de deux cibles, sont appliqués au multiplexeur 33 qui les transfert pour stockage dans deux circuits mémoires 34 et 35. Les mots binaires sont stockés dans le premier circuit mémoire 34 pendant un temps T à partir de l'instant ti considéré. Après ce temps T la bascule stable 32 provoque le basculement du multiplexeur 33 et le stockage des mots binaires s'effectue alors dans le circuit mémoire 35 ceci jusqu'à l'émission du couple d'impulsions suivant.

Le calculateur 36 sera de préférence constitué au moyen d'un microprocesseur avec ses circuits périphériques, il calcule les valeurs des retards stockés en binaire dans les circuits mémoires 34 et 35. La durée T séparant les impulsions d'un couple étant déterminée suffisament grande en fonction de la vitesse radiale maximale possible, il résulte des opérations de triage effectuées par le multiplexeur 33 que les temps correspondant aux échos de la première impulsion de chaque couple d'impulsions émis se trouvent stockés dans le circuit mémoire 34, et que les temps correspondant aux échos de la seconde impulsion de chaque couple d'impulsions émis sont stockés dans le circuit mémoire 35. Le calculateur 36 effectue l'apairage des valeurs se trouvant dans les circuits mémoire 34 et 35 et calcule les temps et les fréquences Doppler correspondant à chaque couple de valeurs issues des circuits mémoire 34 et 35. Il effectue ensuite les comparaisons entre les différents couples de valeurs (to, fD) provenant des lignes à retard variable de pente K ou K', pour ne retenir que ceux donnant des couples identiques par passage dans les lignes à retard de valeur absolue de pente K ou K' selon le procédé décrit plus haut à l'aide de la figure 1.

De ce qui précède, il résulte que l'on peut remplacer la source laser 23 par une source hyperfréquence quelconque afin d'obtenir un radar Doppler. Les circuits 21 et 26 sont alors à adapter en fonction de la source choisie et de la transposition de fréquence retenue.

Des aménagements et variantes de réalisation comprises dans le cadre de l'invention peuvent être apportés au dispositif décrit. A titre d'exemple, le circuit interrupteur commandé 28 qui commute les paires de lignes à la réception peut être placé côté entrées des lignes en sorte que le signal en sortie du mélangeur 10 n'est appliqué qu'à la paire de lignes sélectionnée. Suivant un autre exemple, les moyens de commande du multiplexeur 33 peuvent être déterminés en sorte d'autoriser le transfert pendant une durée T vers la mémoire 34 comme prévu, puis n'autoriser ensuite ce transfert vers la mémoire 35 que également pendant une durée limitée à T, le récepteur étant fermé pendant la durée To-2T restante de la période considérée.

Il y a lieu de remarquer que le microprocesseur 36 est à même de synchroniser l'ensemble émetteur-récepteur et qu'on peut en ce sens considérer que les moyens de synchronisation peuvent se situer dans ce bloc.

On a ainsi décrit un dispositif de détection électromagnétique, plus particulièrement destiné à un télémètre à laser permettant de détecter simultanément plusieurs cibles en mesurant à la fois la distance et la vitesse radiale de chaque cible.

## Revendications

1. Système de détection électromagnétique à compression d'impulsions utilisable notamment pour réaliser un télémètre laser, comportant à l'émission, un générateur d'impulsions périodiques (9) modulées en fréquence connecté à un générateur d'ondes électromagnétiques (4) et à la réception, un mélangeur (10) alimenté par une onde locale issue du générateur d'ondes électromagnétiques et qui est connecté à travers un filtre adapté (11, 12, 13 et 14) de type dispersif à un circuit de détection (29) suivi d'un circuit de mesure (150) qui détermine la distance et la fréquence Doppler d'une cible détectée, caractérisé en ce que le générateur d'impulsions (9) délivre au début de chaque période un couple d'impulsions à un ensemble de filtres dispersifs constitué par au moins deux paires de lignes à retard variable avec la fréquence, les impulsions d'un couple étant appliquées respectivement aux lignes (5-6) d'une première paire et à la période d'émission suivante aux lignes (7-8) de la deuxième paire, et ainsi de suite, chaque paire de lignes à retard variable avec la fréquence étant constituée de lignes de même valeur de pente (K) mais de signe opposé, la valeur de pente (K, K') étant distincte d'une paire à l'autre, les impulsions d'un couple ainsi traitées étant dites conjuguées, le filtre adapté comportant un même agencement de lignes (11-12, 13-14) qu'à l'émission utilisées de manière conjuguée pour comprimer les échos reçus, c'est-à-dire que l'impulsion d'un couple qui à été traitée à l'émission par passage dans une ligne de pente donnée est traitée à la réception par passage dans la ligne du filtre adapté qui présente la même valeur de pente et le signe opposé; le circuit de mesure (150) comporte en série des moyens de comptage (30) pour compter les délais entre l'instant d'émission et les instants de réception des échos renvoyés par chaque cible, et des moyens de mémorisation (34-35) et de calcul (36) pour calculer la distance et la fréquence Doppler de chaque cible détectée et pour mémoriser les différentes valeurs possibles à chaque période et discriminer les vraies valeurs par comparaison des résultats de calcul et sélection des valeurs inchangées à la suite d'au moins deux périodes de fonctionnement.

2. Dispositif selon la revendication 1, caractérisé en ce que la valeur de pente est une constante pour chaque ligne de manière à produire une modulation linéaire en fréquence de l'impulsion incidente à l'émission et inversement, une démodulation linéaire correspondante à la réception, et en ce que les impulsions d'un couple sont séparées par un intervalle de temps (T) supérieur à la durée ($\mathcal{T}$) d'impulsion, inférieur à la période (To) de répétition d'émission, et vérifiant la relation $T > 2KfDM$ où K représente la valeur de pente maximale et $fDM$ la fréquence Doppler maximale envisageable pour les cibles détectées.

3. Dispositif selon la revendication 1 ou 2, et dans lequel un oscillateur local produit un signal à la fréquence $f$ et est modulé pour fournir lesdits couples et impulsions de durée $\mathcal{T}$ telle que $\mathcal{T} \cdot f > 1$, caractérisé en ce que le générateur d'impulsions (9) comporte un premier circuit d'aiguillage (24) pour appliquer successivement une impulsion à chaque ligne de l'émetteur par permutation circulaire et cycliquement au cours de $n$ périodes de répétition, $n$ étant le nombre de paires de lignes utilisées, les sorties des lignes de l'émetteur étant regroupées pour constituer une sortie unique de modulation du générateur d'ondes électromagnétiques (4), qu'un deuxième circuit d'aiguillage (28) est inséré avec les lignes de réception (11, 12, 13, 14) entre la sortie du mélangeur (10) et le circuit de détection (29) en sorte de sélectionner une paire de lignes à la fois, le deuxième circuit d'aiguillage étant commandé en synchronisme avec l'émission pour connecter au cours de chaque période (To) la paire conjuguée de celle d'émission, et que le circuit de mesure comporte un circuit de comptage binaire (30) connecté à travers un circuit multiplexeur (32-33) à deux circuits mémoires (34-35), ces éléments étant commandés en sorte de stocker dans une première mémoire (34) les instants successifs de réception d'échos durant l'intervalle de temps (T) séparant l'instant initial d'émission de la première impulsion d'un couple de celui de la deuxième impulsion, et pour stocker dans la seconde mémoire les instants successifs de réception d'échos durant l'intervalle de temps suivant la même valeur.

4. Dispositif selon la revendication 3, caractérisé en ce que les mémoires sont connectées à un circuit de calcul (36) du type microprocesseur qui calcule les distances et fréquences Doppler de chaque cible détectée et qui assure en outre la synchronisation de l'ensemble émetteur récepteur.

5. Utilisation d'un dispositif selon l'une quelconque des revendications 1 à 4 pour réaliser un télémètre laser, caractérisé en ce que le générateur d'ondes électromagnétiques (4) comporte un laser (23), un dispositif mélangeur (21) recevant le faisceau laser et un signal électrique de modulation constitué par la sortie commune des lignes de l'émetteur, et un dispositif séparateur optique pour prélever une fraction du faisceau laser destiné à un mélangeur (26) du type à entrées optiques et sortie électrique utilisé à la réception.

**Patentansprüche**

1. Elektromagnetisches Detektionssystem mit Impulskompression, insbesondere verwendbar zur Herstellung eines Laserentfernungsmessers, mit einem Generator (9) für periodische frequenzmodulierte Impulse auf der Senderseite, der an einen Generator (4) für elektromagnetische Wellen angeschlossen ist, und mit einem Mischer (10) auf der Empfangsseite, der von einer vom Generator für elektromagnetischer Wellen ausgehenden lokalen Welle gespeist ist und über ein angepasstes Filter (11, 12, 13 und 14) vom dispersiven Typ an einen Detektionsschaltkreis (29) angeschlossen ist, wobei dieser Schaltkreis von einem Messkreis (150) gefolgt ist, der die Entfernung und die Dopplerfrequenz eines entdecken Ziels bestimmt, dadurch gekennzeichnet, dass der Impulsgenerator (9) zu Beginn jeder Periode ein Impulspaar an eine dispersive Filteranordnung liefert, die aus mindestens zwei Paaren von mit der Frequenz variablen Verzögerungsleitungen besteht, wobei die Impulse eines Impulspaares an die Leitungen (5 - 6) eines ersten Leitungspaares bzw. in der nächstfolgenden Sendeperiode an die Leitungen (7 - 8) des zweiten Leitungspaares usw. angelegt werden und wobei jedes Paar der mit der Frequenz variablen Verzögerungsleitungen aus Leitungen gleichen Flankenwerts (K), aber mit entgegengesetztem Vorzeichen besteht, wobei der Flankenwert (K, K') von einem Leitungspaar zum anderen wechselt, wobei die so behandelten Impulse eines Impulspaares konjugiert genannt werden, dass das angepasste Filter eine gleiche Anordnung von Leitungen (11 - 12, 13 - 14) wie auf der Sendeseite aufweist, die zur Kompression der empfangenen Echos in konjugierter Weise verwendet werden, d.h. dass der Impuls eines Impulspaares, der sendeseitig eine Leitung einer gegebenen Flanke durchlaufen hat, auf der Empfangsseite die Leitung des angepassten Filters durchläuft, die denselben Flankenwert, aber entgegengesetztes Vorzeichen aufweist, und dass der Messkreis (150) eine Reihe von Zählmitteln (30) zur Zählung der Verzögerungen zwischen dem Sendezeitpunkt und den Zeitpunkten, an denen die von jedem Ziel reflektierten Echos empfangen werden, und Speicher- (34 bis 35) und Rechenmittel (36) zur Berechnung der Entfernung und der Dopplerfrequenz jedes erkannten Ziels und zur Speicherung der verschiedenen möglichen Werte in jeder Periode und zur Diskriminierung der wahren Werte durch Vergleich der Rechenergebnisse und durch Selektion der über mindestens zwei Betriebsperioden unveränderten Werte aufweist.

2. Vorrichtung nach Anspruch 1, dadurch gekennzeichnet, dass der Flankenwert für jede Leitung eine Konstante ist, so dass sich eine lineare Frequenzmodulation der ankommenten Impulse auf der Sendeseite ergibt und umgekehrt eine entsprechende lineare Frequenzmodulation der ankommenden Impulse auf der Sendeseite ergibt und umgekehrt eine entsprechende lineare Demodulation auf der Empfangsseite, und dass die Impulse eines Impulspaares durch einen Zeitabstand (T) voneinander getrennt sind, der grösser als die Impulsdauer ($\mathfrak{I}$) und kleiner als die Sendefolgeperiode (To) ist sowie die Beziehung T > 2KfDM erfüllt, in der K den maximalen Flankenwert und fDM die grösste vorkommende Dopplerfrequenz für die entdeckten Ziele angibt.

3. Vorrichtung nach Anspruch 1 oder 2, in der ein lokaler Oszillator ein Signal der Frequenz f erzeugt und moduliert ist, um die erwähnten Impulspaare und Impulse der Dauer $\mathfrak{I}$ zu liefern derart, dass $\mathcal{T} \cdot f > 1$ ist, dadurch gekennzeichnet, dass der Impulsgenerator (9) einen ersten Weichenschaltkreis (24) aufweist, um nacheinander einen Impuls an jede Leitung des Senders mittels ringförmiger und zyklischer Permutation während n Wiederholperioden anzulegen, wobei n die Anzahl der verwendeten Leitungspaare angibt und die Ausgänge der Leitungen des Senders zusammengefasst sind, um einen einzigen Modulationsausgangs des Generators (4) für elektromagnetische Wellen zu bilden, dass ein zweiter Weichenschaltkreis (28) mit den empfangsseitigen Leitungen (11, 12, 13, 14) zwischen den Ausgang des Mischers (10) und den Detektionsschaltkreis (29) eingefügt ist, derart, dass jeweils gleichzeitig ein Paar von Leitungen ausgewählt wird, wobei der zweite Weichenschaltkreis synchron mit der Sendeseite gesteuert wird, um im Lauf einer Periode (To) das der Sendeseite konjugierte Leitungspaar anzuschliessen, und dass der Messkreis einen binären Zählkreis (30) enthält, der über einen Multiplexerkreis (32 - 33) an zwei Speicherkreise (34 - 35) angeschlossen ist, wobei diese Elemente so gesteuert werden, dass sie in einem ersten Speicher (34) die aufeinander folgenden Zeitpunkte speichern, an denen Echos während des Zeitintervalls (T) empfangen werden, das vom ursprünglichen Sendezeitpunkt des ersten Impulses eines Impulspaars bis zum Sendezeitpunkt des zweiten Impulses reicht, und in einem zweiten Speicher die aufeinanderfolgenden Zeitpunkte speichern, an denen Echos während des Zeitintervalls gemäss demselben Wert empfangen werden.

4. Vorrichtung nach Anspruch 3, dadurch gekennzeichnet, dass die Speicher mit einem Rechenkreis (36) vom Typ Mikroprozessor verbunden sind, der die Entfernungen und Dopplerfrequenzen jedes erkannten Zieles berechnet und ausserdem die Synchronisierung der aus Sender und Empfänger gebildeten Einheit bewirkt.

5. Verwendung einer Vorrichtung gemäss einem beliebigen der Ansprüche 1 bis 4, zur Herstellung eines Laserentfernungsmessers, dadurch gekennzeichnet, dass der Generator (4) für elektromagnetische Wellen einen Laser (23), eine Mischvorrichtung (21), die den Laserstrahl und ein elektrisches aus dem gemeinsamen Ausgang der sendeseitigen Leitungen gebildetes Modulationssignal zugeführt erhält, und eine Vorrichtung zur optischen Trennung enthält, mit der ein Teil des für einen Mischer (26) bestimmten Laserstrahls entnommen wird, wobei der Mischer optische Eingänge und einen elektrischen Ausgang besitzt und beim Empfang verwendet wird.

## Claims

1. An electromagnetic detection system with pulse compression which can be preferably employed for realizing a laser telemeter device, comprising, on the emission side, a generator (9) for producing periodical pulses which are modulated by frequency, said generator being connected to a generator (4) for producing electromagnetic waves, and comprising, on the reception side, a mixer (10) which is fed by a local wave issued from the electromagnetic wave generator and which is connected via an adapted filter (11, 12, 13, 14) of the dispersion type to a detection circuit (29) followed by a measuring circuit (50) which determines the distance and the Doppler frequency of a detected target, characterized in that the pulse generator (9), at the beginning of each period, delivers a couple of pulses to a group of dispersion type filters constituted by at least two pairs of frequency dependent variable delay lines, the pulses of a couple being applied respectively to the lines (5-6) of a first pair and, at the next following emission period, to the lines (7-8) of the sècond pair and so on, each pair of frequency dependent variable delay lines being constituted of lines having the same slope value (K) but opposite sign, the slope value (K, K') differing from one pair to the other, the thus treated pulses of a couple being called conjugate pulses, the adapted filter comprising an arrangement of conjugately used lines (11-12, 13-14) identical to the arrangement on the emission side for compressing the received echos, that means that the pulses of a having been treated on the emission side by passing through a line of a given slope is treated on the reception side by passing through that line of the adapted filter which presents the same slope value but opposite sign; and that the measuring circuit (150) comprises in a series configuration: counting means (30) for counting the delays between the emission instant and the reception instants of the echos sent back from each target, and storage (34-35) and computer means (36) for computing the distance and the Doppler frequency of each detected target and for storing the different possible values of each period and for discriminating the real values by comparison of the computed results and by selection of the unmodified values after at least two periods of operation.

2. A device according to claim 1, characterized in that the slope value is a constant value for each line such that a modulation which is linearly dependent on the frequency is applied to the incoming pulse on the emission side, and in the opposite direction a corresponding linear demodulation on the reception side, and that the pulses of a couple are separated by a time interval (T) which is greater than the pulse duration ($\tau$) but smaller than the emission repetition period (To) and which verifies the relation $T > 2KfDM$ in which K represents the maximum slope value and fDM represents the maximum conceivable Doppler frequency for the detected targets.

3. A device according to claim 1 or 2 and in which a local oscillator produces a signal at the frequency f and is modulated in order to produce said couples and pulses of a duration $\tau$ such that $\tau \cdot f > 1$, characterized in that the pulse generator (9) comprises a first switch-over circuit (24) for applying successively a pulse to each line of the emitter by circular permutation and cyclically during n repetition periods, n being the number of pairs of employed lines, the outputs of the emitter lines being assembled such that they constitute a single modulation output of the electromagnetic wave generator (4), and that a second switch-over circuit (28) is inserted together with the lines on the reception side (11, 12, 13, 14) between the output of the mixer (10) and the detection circuit (29) in such a way that at each instant a pair of lines is selected, the second switch-over circuit being controlled synchroneously with the emission in order to connect during each periode (To) the conjugated pair with respect to the pair on the emission side, and that the measuring circuit comprises a binary counting circuit (30) which is connected via a multiplex circuit (32-33) to two memory circuits (34-35) these elements being controlled in such a way that in a first memory (34) the successive instants of the reception of echos are stored during the time interval (T) which separates the initial emission instant of the first pulse of a couple from the emission instant of the second pulse, and that in the second memory the successive instants of the reception of echos during the time interval corresponding to the same value are stored.

4. A device according to claim 3, characterized in that the memories are connected to a computing circuit (36) of the microprocessor type which calculates the distances and Doppler frequencies of each detected target and which moreover ensures the synchronisation of the emitter-receiver unit.

5. Application of a device according to any one of claims 1 to 4, for the realisation of a laser telemeter device, characterized in that the electromagnetic wave generator (4) comprises a laser (23), a mixer device (21) receives the laser bundle and an electrical modulation signal constituted by the common output of the lines of the emitter, and an optical separation device for sampling a fraction of the laser bundle destined to a mixer (26) having optical inputs and electrical outputs and being used on the reception side.

0 023 857

FIG_1·a

FIG_1-b

FIG_1-C

FIG_2

9

FIG_3